# EUROPÄISCHE PATENTSCHRIFT

(11) **EP 2 312 370 B1**
(45) Veröffentlichungstag und Bekanntmachung des Hinweises auf die Patenterteilung: **04.01.2017**
(21) Anmeldenummer: 10075762.4
(22) Anmeldetag: 30.11.2007
(51) Int. Cl.: G02B 21/36

(54) **Kameraadapter mit Kamerahalterung und Optikadapter**
Camera adapter with camera holder and lens adapter
Adaptateur d'appareil photo doté d'une fixation d'appareil photo et d'un adaptateur optique

(30) Priorität: 05.12.2006 DE 102006058358
(43) Veröffentlichungstag der Anmeldung: 20.04.2011
(62) Teilanmeldung aus: 07076035.0
(73) Patentinhaber: Carl Zeiss Meditec AG, 07745 Jena (DE)
(72) Erfinder: Gärtner, Hartmut, 73447 Oberkochen (DE); Koch, Werner, 75210 Keltern (DE); Robra, Wolfgang, 75323 Bad Wildbad (DE); Lücke, Christian, 73447 Oberkochen (DE); Rieth, Karsten, 75332 Bad Herrenalb (DE)
(74) Vertreter: Theobald, Andreas

(56) Entgegenhaltungen:
- DE-A1- 4 344 366
- DE-U1- 20 010 421
- DE-U1- 29 722 332
- GB-A- 190 515 732
- US-A- 2 974 573
- US-A- 4 988 173
- US-A- 5 006 872
- "Okular", Wikipedia, freie Enzyklopädie , 17. Juli 2011 (2011-07-17), XP002653974, Gefunden im Internet: URL:http://de.wikipedia.org/w/index.php?ti tle=Okular&printable=yes [gefunden am 2011-07-28]
- Warren J. Smith: "Modern Optical Engineering - The design of optical systems", 1990, McGraw-Hill, New York ISBN: 0-07-059174-1

## Beschreibung

Die vorliegende Erfindung betrifft einen Optikadapter zum Zwischenschalten zwischen ein optisches Beobachtungsgerät und eine Kamera.

In der Mikroskopie werden spezielle Fototuben eingesetzt, die für fotografische Aufnahmen eine Auskopplungseinrichtung im binokularen Tubus des Beobachters aufweisen. Das Anordnen der Auskopplungseinrichtung im binokularen Tubus des Beobachters ist jedoch nicht immer ohne weiteres möglich. Beispielsweise werden in der Mikrochirurgie häufig Schwenktuben eingesetzt, um ein Operationsmikroskop an die Operationssituation ergonomisch anpassen zu können. Bei Schwenktuben ist der Einsatz einer Auskopplungseinrichtung im binokularen Tubus jedoch nicht möglich. Für Stereomikroskope wie etwa Operationsmikroskope wählt man daher derzeit zumeist einen Kompromiss, nämlich einen sogenannten TV-Adapter, der mit einer Zusatzoptik versehen ist. Dieser wird an eine Auskopplungseinrichtung im Bereich des parallelen Strahlenganges zwischen dem Vergrößerungswechsler und dem Binokulartubus adaptiert.

Während ein TV-Adapter zum Aufnehmen von Fernsehbildern gut geeignet ist, eignet er sich weniger zur Verwendung zusammen mit digitalen Fotoapparaten. Die Verwendung des TV-Adapters stellt daher lediglich ein Kompromiss dar, der einige Nachteile mit sich bringt. So ist beispielsweise die Pupillenanpassung nicht optimal, so dass es passieren kann, dass in einem mit dem Fotoapparat aufgenommenen Bild das Sichtfeld beschnitten ist oder dass man so stark zoomen muss, dass nur ein kleiner Teil des Objektfeldes aufgenommen werden kann. Zum anderen werden die Bildgütekriterien für hoch auflösende Kamerachips in digitalen Fotoapparaten mit TV-Adaptern in der Regel nicht erfüllt, da sie an das Auflösungsvermögen von TV-Kameras, dass deutlich geringer ist als das von Fotoapparaten, angepasst sind. Mit anderen Worten, die Optik von TV-Adaptern wird den Ansprüchen, die ein digitaler Fotoapparat stellt, kaum gerecht.

In DE 200 10 421 U1 ist ein Adapter beschrieben, der ein Zwischenbild, das von einer Tubuslinse eines Mikroskops erzeugt wird, nach unendlich abbildet.

DE 43 44 366 A1 beschreibt ein optisches System, in dem mittels zweier Linsengruppen ein Zwischenbild auf eine CCD-Matrix abgebildet wird.

Die US 4,988,173 beschreibt ein afokales optisches System, mit dem die Brennweite eines optischen Gerätes variiert werden kann, ohne dass die Länge des optischen Gerätes verändert werden muss. Um dies zu erreichen, umfasst das afokale optische System zwei Positivlinsen, zwischen denen eine Negativlinse verschiebbar angeordnet ist. Das afokale optische System wird dabei zwischen einem vorangehenden optischen System und einem nachfolgenden optischen System angeordnet, wobei das nachfolgende optische System in eine Kamera münden kann.

Die US 2,974,573 beschreibt einen Adapter, der zwischen ein Teleskop und eine Kamera oder zwischen ein Mikroskop und eine Kamera geschaltet werden kann. Der in Figur 1 der US 2,974,573 dargestellte Adapter zum Verbinden einer Kamera mit einem Teleskop umfasst ein kameraseitiges Objektivlinsensystem mit einer Anzahl von Linsen, die ein im Bereich einer Feldblende angeordnetes Zwischenbild nach Unendlich abbilden. An dem mit dem Teleskop zu verbindenden Ende weist das optische System eine teleskopische Objektivlinse auf, die aus einem parallelen Strahlengang das Zwischenbild erzeugt. Wenn der Adapter statt an einem Teleskop an einem Mikroskop Verwendung finden soll, wird das teleskopische Objektiv durch ein Objektiv ersetzt, welches als pankratisches System ausgebildet ist.

GB 15,732 A und Warren J. Smith: "Modern Optical Engineering - The design of optical systems", 1990, McGraw-Hill, New York, ISBN: 0-07-059174-1 beschreiben die Ausgestaltung von Teleobjektiven.

Ein weiteres Problemfeld von Kameraadaptern nach Stand der Technik, die für Operationsmikroskope Verwendung finden, liegt in der Mechanikschnittstelle, also in der Art der Fixierung des Fotoapparats Kameraadapter. Dies betrifft sowohl herkömmliche Kameraadapter als auch TV-Adapter. Die Mechanikschnittstellen, die heutzutage von vielen Herstellern von Kameraadaptern eingesetzt werden, sind einerseits ein am äußeren Ende des Kameraobjektivs vorhandenes Filtergewinde oder ein dort vorhandenes Bajonett. Derartige mechanische Schnittstellen sind jedoch in der Regel nicht standardisiert und werden häufig mit dem jährlichen Modellwechsel vom Hersteller verändert. Unter Umständen kann eine derartige Schnittstelle beim Fotoapparat sogar ganz entfallen. Insbesondere im Bereich von Digitalen Kompaktkameras gibt es eine Vielzahl von Produkten, die weder ein Filtergewinde noch ein Bajonett aufweisen. Trotzdem nehmen viele Hersteller von Kameraadaptern die genannten Risiken, die sich beim Modellwechsel ergeben, in Kauf und statten ihre Kameraadapter mit zu speziellen Bajonetten oder speziellen Filtergewinden passenden Gegenstücken aus, an denen Kameras mit entsprechenden Filtergewinden oder Bajonetten fixiert werden können. Die Produktauswahl an Kameras, die an einem derartigen Kameraadapter fixiert werden können, ist jedoch aufgrund der Vielzahl unterschiedlicher Filtergewinde und Bajonette, die sich beispielsweise schon alleine aus verschiedenen Objektivdurchmesser ergeben kann, eingeschränkt.

Es wurde daher vorgeschlagen, zum Befestigen von Fotoapparaten an Mikroskopen oder Teleskopen Halterungen zu verwenden, die das Stativgewinde, das an nahezu allen Fotoapparaten vorhanden ist und eine weitgehende Standardisierung erfahren hat, zum Fixieren des Fotoapparats zu verwenden. Stativgewinde sind langlebig, das heißt die Schnittstelle bleibt in der Regel beim Modellwechsel als konstante Größe erhalten, und werden von fast allen Kameraherstellern auf der Kameraunterseite angeboten. Im Gegensatz zur Fixierung über Filtergewinde oder Bajonette, die zentrisch zum Objektiv angeordnet sind, weisen die Stativgewinde jedoch einen translatorischen Versatz in wenigstens zwei Richtungen gegenüber dem Objektiv auf. Es ist daher eine aufwändige Justierung eines über das Stativgewinde direkt oder indirekt an einem optischen Beobachtungsgerät fixierten Fotoapparates gegenüber dem Fotoadapter nötig.

Vorrichtungen zum Fixieren von Fotoapparaten an Mikroskopen, Feldstechern und Teleskopen unter Verwendung des Stativgewindes sind beispielsweise in JP 2006-39191A, JP 2002-277953A, GB 1 215 710, US 2002/0197075 A1 und US 2,990,759 beschrieben. All diese Vorrichtungen weisen Verstelleinrichtungen auf, mit denen sich ein Versatz zwischen dem Objektiv und dem Stativgewinde ausgleichen lässt.

Aufgabe der vorliegenden Erfindung ist es, einen Optikadapter zur Verfügung zu stellen, der in Kameraadaptern zum Einsatz kommen kann und mit Bezug auf die TV-Adapter genannten Nachteile vermeidet.

Die genannte Aufgabe wird durch einen Optikadapter nach Anspruch 1 gelöst.

Ein erfindungsgemäßer Optikadapter zum Zwischenschalten zwischen ein optisches Beobachtungsgerät und eine Kamera umfasst eine afokale optische Anordnung mit einer ersten Linsenkombination, die in Art eines Teleobjektivs ausgestaltet ist, einer zweiten Linsenkombination, die der ersten Linsenkombination nachgeschaltet und deren Abbildungseigenschaften denen eines Okulars entsprechen, und einer reellen Abbildung der Eintrittspupille als Austrittspupille. Die Austrittspupille der optischen Anordnung befindet sich 40 Millimeter bis 100 Millimeter hinter dem Scheitel der letzten Linse. Hiermit lässt sich gewährleisten, dass sich die Austrittspupille des Adapters in die Eintrittspupille eines kompakten Kameraobjektivs wie etwa eine Digitalkamera abbilden lässt. In einer derartigen optischen Anordnung erzeugt die erste Linsenkombination ein Zwischenbild, das mit der zweiten Linsenkombination ins Unendliche abgebildet wird. Die Ausgestaltung der ersten Linsenkombination als Teleobjektiv ermöglicht eine relativ kompakte Bauweise des Optikadapters für eine vorgegebene Brennweite des ersten Linsensystems, oder es können bei einer vorgegebenen Baulänge des Optikadapters größere Brennweiten verwendet werden, was Abbildungsfehler zu minimieren hilft. Durch eine geeignete Brechkraftverteilung in der optischen Anordnung kann hierbei auch ohne eine Feldlinse in der Nähe des Zwischenbildes der zuvor genannte Abstand der Austrittspupille vom Scheitel der letzten Linse erreicht werden. Die Brechkraftverteilung ist dadurch realisiert, dass die erste, als Teleobjektiv ausgestaltete Linsenkombination zwei Linsen umfasst, wobei die eine Linse eine Positivlinse ist und die andere Linse eine der Positivlinse im Strahlengang nachfolgende Negativlinse, die eine größere Brechkraft als die Positivlinse hat.

Wenn sich die Austrittspupille der optischen Anordnung 50 Millimeter bis 60 Millimeter hinter dem Scheitel der letzten Linse befindet, kann auch bei einer Telebrennweite des kompakten Kameraobjektivs gewährleistet werden, dass sich die Austrittspupille des Adapters in die Eintrittspupille des Kameraobjektivs abbilden lässt.

Eine Feinjustierung der Pupillenlage kann für die meisten digitalen Kompaktkameras zur optimalen Anpassung durch Variation des Abstandes des Kameraobjektivs vom Optikadapter erfolgen. Eine derartige Variation ist insbesondere dann möglich, wenn eine Kamerahalterung mit einer Hülse variabler Länge zum Fixieren der Kamera am Optikadapter Verwendung findet.

Zum Umlenken des Strahlenganges im Optikadapter kann zwischen der ersten Linsenkombination und der zweiten Linsenkombination außerdem eine den Strahlengang ablenkende Reflexionsfläche, beispielsweise eine Prismenfläche oder eine Spiegelfläche, vorhanden sein.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Fig. 1 zeigt einen Kameraadapter mit daran adaptierter Digitalkamera.
Figuren 2a bis 2c zeigen ein erstes Beispiel für die Kamerahalterung des Kameraadapters aus Fig. 1.
Figuren 3a bis 3c zeigen ein zweites Beispiel für die Kamerahalterung des Kameraadapters aus Fig.1.
Figuren 4a bis 4c zeigen ein drittes Beispiel für die Kamerahalterung des Kameraadapters aus Fig.1.
Fig. 5 zeigt ein Detail der Kamerahalterung.
Fig. 6 zeigt schematisch die optischen Komponenten des Optikadapters.

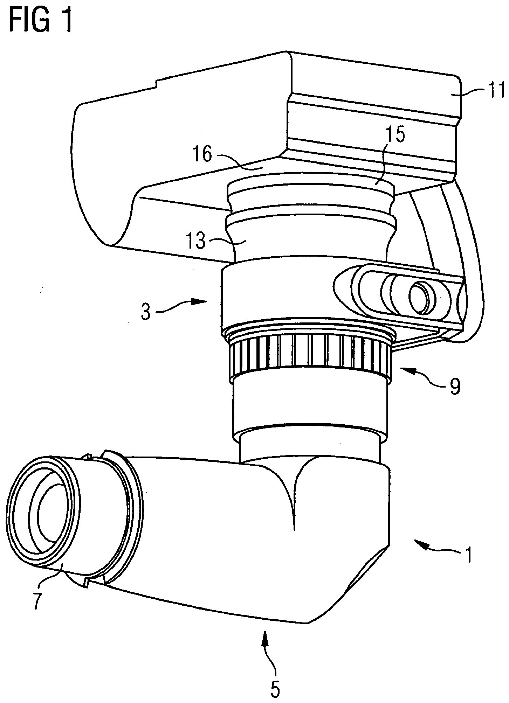

Der in Fig. 1 dargestellte Kameraadapter 1 besteht im wesentlichen aus zwei Teilen, nämlich der Kamerahalterung 3 und dem Optikadapter 5. Der Optikadapter 5 weist an einem Ende eine Steckhülse 7 auf, die in einen passenden Stutzen eines optischen Beobachtungsgerätes wie etwa eine Operationsmikroskopes oder eines Teleskops, eingeführt werden kann. Am anderen Ende des Optikadapters 5 ist eine mechanische Schnittstelle 9 vorhanden, an der die Kamerahalterung 3 befestigt werden kann. Die mechanische Schnittstelle kann im einfachsten Fall als Überwurfmutter ausgebildet sein, die mit einem passenden Außengewinde der Kamerahalterung 3 zusammenwirkt. Die mechanische Schnittstelle kann aber auch anders ausgeführt sein, beispielsweise in Form eines Stutzens und einer zum Stutzen passenden Steckhülse. Gegebenenfalls kann der Abschnitt des Optikadapters 5, in dem die Überwurfmutter 9 angeordnet ist, um die optische Achse des Optikadapters 5 gegen die übrigen Abschnitte des Optikadapters 5 verdreht werden. Die Überwurfmutter und/oder die Drehmöglichkeit können aber auch Teil der Kamerahalterung 3 sein.

In Fig. 1 ist außerdem eine Digitalkamera 11 dargestellt, die über ihr Stativgewinde an der Kamerahalterung 3 befestigt ist. Das Objektiv (in der Figur nicht zu erkennen) ist in eine Hülse 13 der Kamerahalterung 3 eingeführt. Der Rand 15 dieser Hülse 13 bildet einerseits eine Auflagefläche für die das Kameraobjektiv umgebende Gehäusefläche 16, die die optische Achse des Objektivs senkrecht schneidet. Das Aufliegen auf dem Rand 15 sorgt daher dafür, dass die optische Achse des Kameraobjektivs parallel zur longitudinalen Hülsenachse und damit parallel zur optischen Achse des Kameraadapters 1, verläuft. Außerdem schirmt die Hülse 13 das Kameraobjektiv gegen Umgebungslicht ab.

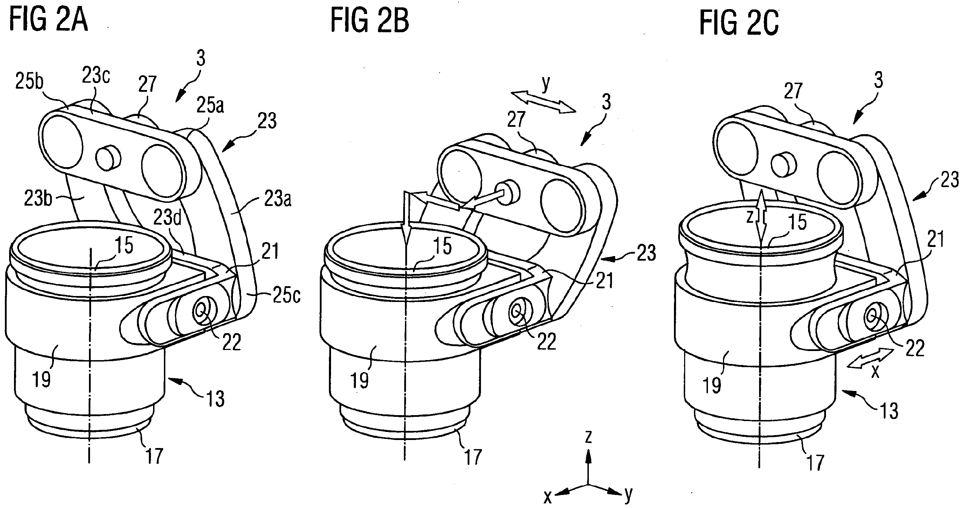

Ein erstes Ausführungsbeispiel für die Kamerahalterung des Kameraadapters 1 ist in den Figuren 2a bis 2c im Detail dargestellt. Es sind die Hülse 13, der Rand 15 sowie am dem Rand 15 gegenüber liegenden Ende ein Außengewinde 17 zu erkennen. Das Außengewinde 17 stellt das Gegenstück zur Überwurfmutter des Optikadapters dar und bildet somit die mechanische Schnittstelle zu diesem. Statt des Außengewindes kann auch eine Steckhülse oder ein Stutzen vorhanden sein.

Die Hülse 13 ist von einem Klemmring 19 umgeben, der mit einem Schieber 21 verbunden ist. Am dem Klemmring 19 abgewandten Ende des Schiebers 21 ist ein Gelenkparallelogramm 23 angeordnet, das aus vier Hebelarmen 23a bis 23d aufgebaut ist, die jeweils an ihren Enden über Drehgelenke 25a bis 25d mit einander verbunden sind. Der Hebelarm 23d wird hierbei durch eine Traverse des Schiebers 21 gebildet. In der Mitte des Hebelarms 23c ist eine Schraube 27 mit ein einem zum Stativgewinde einer Kamera passenden Gewinde angeordnet.

Mittels der dargestellten Konstruktion ist ein Justieren der Kamera 11 relativ zur Hülse 3 mit drei zu einander senkrecht stehenden Freiheitsgraden möglich. Die Justierung in X-Richtung erfolgt über den Schieber 21, die Justierung in Y-Richtung durch Bewegen des Parallelogramms 23 und Justierung in Z-Richtung durch Verschieben der Hülse 3 im Klemmring. Zwar ist die Bewegung des Parallelogramms, genauer gesagt der im Parallelogramm angeordneten Schraube 27 (und damit der daran befestigten Kamera) keine Linearbewegung, sondern eine Bewegung auf einer gebogenen Kurve, jedoch kann die Z-Komponente der Kurve durch die Verschieblichkeit der Hülse im Klemmring 19 ausgeglichen werden. Insgesamt ist es dadurch möglich, den Versatz, den ein im Kameragehäuse angeordnetes Stativgewinde zum Kameraobjektiv aufweist, auszugleichen.

Die Bewegungsmöglichkeiten, die der Schieber 21, das Parallelogramm 23 und die verschiebliche Hülse 13 ermöglichen, sind in den Figuren 2a bis 2c durch unterschiedliche Einstellzustände der einzelnen Elemente angedeutet.

Der Schieber 21 und das Gelenkparallelogramm 23 sind mit Klemmschrauben 22 versehen, mit deren Hilfe diese Elemente gegen ungewolltes Bewegen fixiert werden können, sobald die Kamera justiert ist. Statt Klemmschrauben können auch so genannte Schnellspannvorrichtungen vorhanden sein. Ein Schnellspanner könnte beispielsweise einen beweglich gelagerten Nocken umfassen, der derart angeordnet ist, dass er eine erste Stellung einnehmen kann, in der er auf zwei gegen einander bewegliche Elemente der Halterung derart einwirkt, dass er diese aneinanderpresst, und sie so mittels Reibschluss gegeneinander fixiert. In einer zweiten Stellung des Nockens werden die beweglichen Elemente dagegen nicht aneinandergepresst. Um die Bewegung von der ersten Stellung in die zweite Stellung und umgekehrt zu realisieren, kann der Nocken beispielsweise drehbar gelagert sein und mit einem Bedienhebel fest verbunden sein. Mittels des Bedienhebels kann dann der Nocken in seiner Position verändert werden. Eine Schnellspannvorrichtung kann natürlich auch zum Spannen des Klemmrings 19 Verwendung finden.

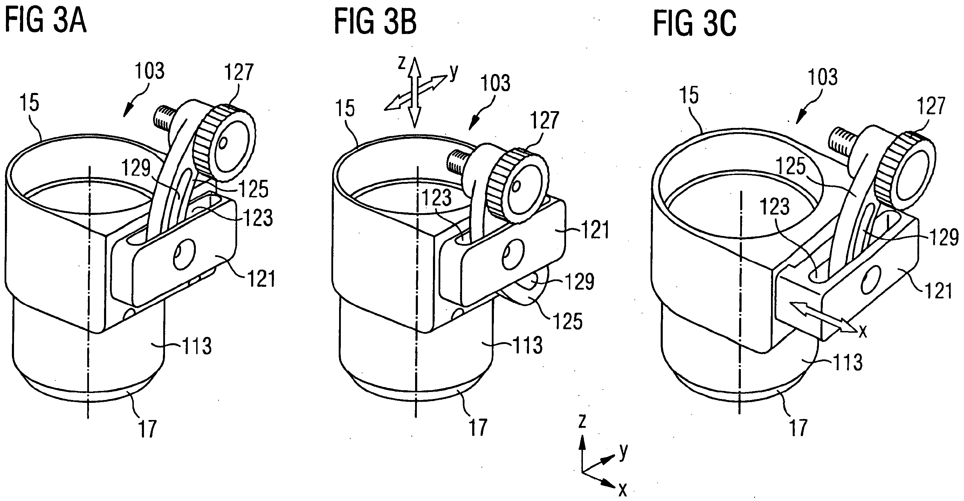

Ein Zweites Beispiel für die Kamerahalterung wird nachfolgend mit Bezug auf die Figuren 3a bis 3c beschrieben. Die Figuren zeigen eine Kamerahalterung 103, die eine Hülse 113 mit einem daran befestigten Schieber 121 umfasst. Der Schieber 121 weist eine Aufnahme 123 auf, in der sich ein kreissegmentförmig gebogener Bügel 125 befindet. Am äußeren Ende des Bügels 125 befindet sich eine zu einem Stativgewinde einer Kamera passende Schraube 127. Der Bügel 125 ist mit einem Langloch 129 versehen, welches eine Krümmung aufweist, die der Krümmung des Bügels 125 folgt.

Durch die Aufnahme 122 des Schiebers 121 erstreckt sich ein Gewindestift (in den Figuren nicht zu erkennen), der durch das Langloch 129 des Bügels 125 geführt ist. Der Gewindestift bildet zusammen mit der Kontur des Langlochs 129 ein Führungssystem zum Führen des Bügels 125, wenn dieser innerhalb der Aufnahme 123 des Schiebers 121 verschoben wird. Außerdem stellt die Stiftachse eine Drehachse dar, um die der Bügel 125 gedreht werden kann. Durch eine Spannmutter, die sich auf einem aus dem Schieber 121 herausragenden Abschnitt des Gewindestiftes befindet (nicht dargestellt) kann der Bügel 125 gegenüber dem Gewindestift fixiert werden.

Wenn der Bügel 125 um den Gewindestift gedreht wird, so beschreibt die Schraube 127, und damit eine an der Schraube 127 befestigte Kamera einen Kreisbogen. Der Radius des Kreisbogens ist hierbei durch den Abstand der Schraube 127 vom Gewindestift festgelegt. Dieser Abstand kann jedoch durch Verschieben des Bügels innerhalb der Aufnahme verändert werden, so dass die Position der Schraube 127 im Bereich einer ringförmigen Fläche, deren Grenzen durch den minimalen Kreisradius und den maximalen Kreisradius festgelegt ist, verschoben werden. Der minimale und der maximale Kreisradius sind wiederum durch die Länge des Bügels 125 und die Position des Langloches 129 im Bügel 125 festgelegt. Statt eines gebogenen Bügels und eines gebogenen Langloches auch ein grader Bügel mit einem geraden Langloch Verwendung finden.

Während, wie beschrieben, ein Justieren der Kamera in Y- und Z-Richtung durch das Zusammenwirken der Drehbewegung des Bügels 125 um den Gewindestift und das Verschieben des Gewindestiftes innerhalb des Langloches 129 möglich ist, ist das Justieren in X-Richtung durch Verschieben des Schiebers 121 möglich. Auch der Schieber ist mit einer Klemmschraube versehen, um ihn in einer gewählten Position festlegen zu können. Dadurch stehen zum Justieren der Kamera drei Freiheitsgrade zur Verfügung, die es ermöglichen, den Versatz zwischen dem Stativgewinde und dem Kameraobjektiv auszugleichen. Zur Verdeutlichung der Bewegungsmöglichkeiten sind in den Figuren 3a bis 3c unterschiedliche Stellungen des Schiebers 121 und des Bügels 125 dargestellt.

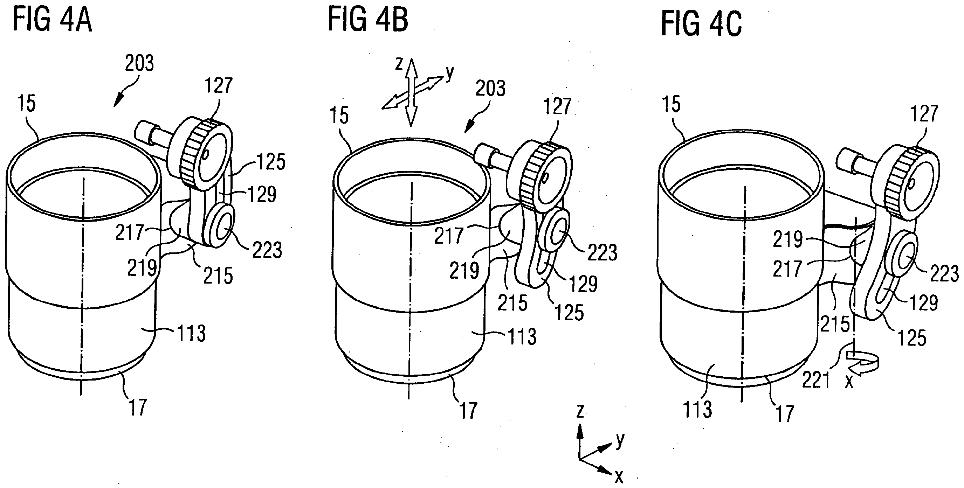

Ein drittes Beispiel für die Kamerahalterung wird nachfolgen mit Bezug auf die Figuren 4a bis 4c beschrieben. Diese Ausführungsvariante ähnelt stark der mit Bezug auf die Figuren 3a bis 3c beschriebenen Ausführungsvariante. Elemente, die in beiden Ausführungsvarianten identisch sind, sind daher in den Figuren 3a bis 3c und 4a bis 4c mit denselben Bezugsziffern bezeichnet.

Die Kamerahalterung 203 des dritten Ausführungsbeispiels umfasst eine Hülse 113, die einen Ansatz 215 mit einer Aufnahme 217 aufweist. In der Aufnahme 217 ist ein Stift 219 schwenkbar gelagert. Die Schwenkachse des Stiftes 219 steht parallel zur Mittelachse der Hülse 113. Der Stift 219 erstreckt sich durch das Langloch 129 eines gebogenen Bügels 125. Wie im zweiten Ausführungsbeispiel weist auch hier das Langloch 129 eine Biegung auf, die der Biegung des Bügels 125 folgt. Auch hier kann statt eines gebogenen Bügels mit einem gebogenen Langloch auch ein gerader Bügel mit einem geraden Langloch Verwendung finden.

Wie im zweiten Ausführungsbeispiel kann auch im dritten Ausführungsbeispiel die Schraube 127 (und damit eine daran befestigte Kamera) im Bereich einer Kreisringfläche bewegt werden, so dass durch die Kombination einer Drehung des Bügels 125 um den Stift 219 und einer Verschiebung des Bügels relativ zum Stift 219 eine Einstellung im Y- und Z-Richtung vorgenommen werden kann.

Die Justierung im X-Richtung wird in diesem Ausführungsbeispiel durch eine Schwenkbewegung des Stiftes 219, der den Bügel 125 trägt, ermöglicht. Die Schwenkbewegung erfolgt um die Schwenkachse 221 (vgl. Fig. 4c). Bei einem Schwenken des Stiftes 219 um die zur Mittelachse der Hülse 113 parallele Schwenkachse 221 verändert sich der Abstand der Schraube 127 von der Mittelachse der Hülse 113. Durch das Zusammenspiel der Drehung des Bügels 125 um den Stift 219, der Schwenkbewegung des Stiftes 219 um die Schwenkachse 221 und der Verschiebebewegung des Bügels 125 relativ zum Stift 219 lassen sich daher drei Freiheitsgrade zum Justieren der Kamera relativ zur Hülse 113 realisieren. Ein Festlegen der Position lässt sich durch eine einzige Klemmung 223 im Bereich des Stiftes 219 realisieren, beispielsweise durch eine auf den Stift 219 aufgesetzte Spannschraube.

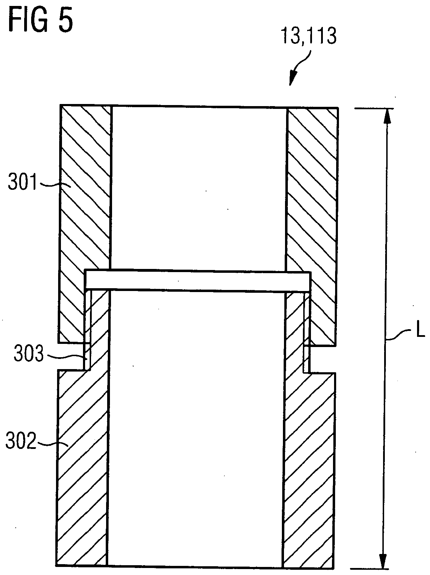

In allen drei Ausführungsbeispielen ist die Hülse 13, 113 zweiteilig ausgebildet. Dies ist schematisch in Fig. 5 dargestellt. Die in Fig. 5 dargestellte Hülse 13, 113 umfasst eine erstes Hülsenteil 301, das ein Innengewinde aufweist und ein zweites Hülsenteil 302, das ein zum Innengewinde passendes Außengewinde 303 aufweist. Die beiden Hülsenteile sind teilweise mit einander verschraubt.

Die axiale Länge L der Hülse lässt sich durch Verdrehen der beiden Hülsenteile 301, 302 gegeneinander variieren. Die Längenänderung bezogen auf den Drehwinkel hängt von der Steigung des Gewindes 303 ab. Ein Verdrehen der beiden Hülsenteile 301, 302 gegeneinander ermöglicvht einpräzises Einstellen des Abstands einer in der Kamerahalterung 3 gehaltenen Kamera 11, genauer gesagt, Ihres Kameraobjektivs, vom Optikadapter 5, was dazu genutzt werden kann, die Ausgangspupille des Optikadapters in die Eingangspupille des Kameraobjektivs zu justieren. Statt der beschriebenen Justierung über ein Außen- und ein Innengewinde der beiden Hülsenteile 301, 302 besteht auch die Möglichkeit, die Hülse in Art eines Teleskopauszuges auszugestalten. Die Justierung kann dann durch Verstellen des Teleskopauszuges erfolgen. Insbesondere ermöglicht es der Teleskopauszug auch, die beiden Hülsenteile zusätzlich noch um die Hülsenachse drehbar auszugestalten, ohne dass sich bei einer Drehung die Hülsenlänge L verändert. Eine solche Drehung von Hülsenteilen gegeneinander kann dazu verwendet werden, das vom optischen Beobachtungsgerät angebotene Bild in der Kamera aufzurichten. In diesem Fall kann die mit Bezug auf Fig. 1 beschriebene Drehmöglichkeit im Optikadapter 5 entfallen.

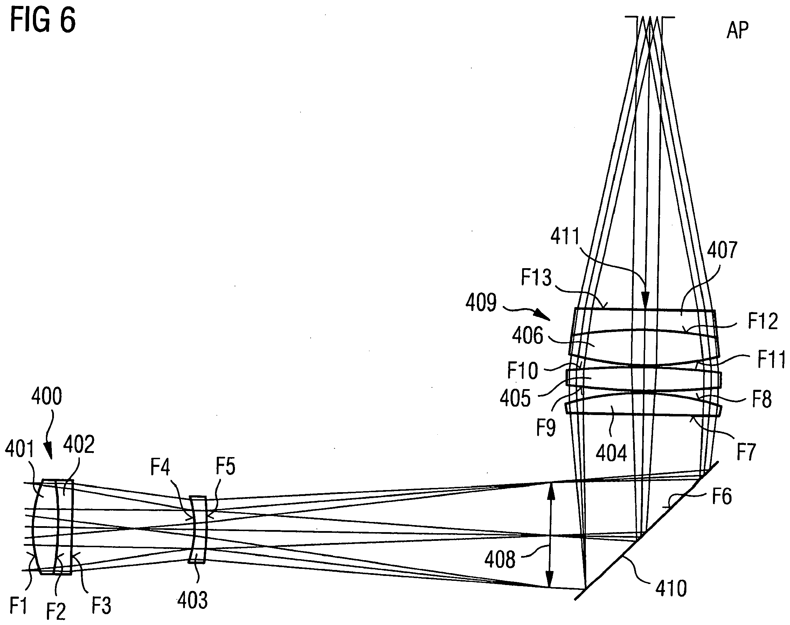

In Fig. 6 sind die optischen Komponenten des Optikadapters schematisch dargestellt. Der Optikadapter 5 umfasst fünf Linsen 400, 403, 404, 405 und 409, von denen die erste Linse 400 und die letzte Linse 409 als Kittglieder ausgebildet ist.

Die Linsen lassen sich in zwei Linsengruppen unterteilen. Die erste Linsengruppe umfasst die Linsen 401, 402 und 403 und stellt ein Teleobjektiv dar. Das Kittglied 400 stellt insgesamt eine Positivlinse dar, die aus einer Positivlinse 401 und einer Negativlinse 402 zusammengesetzt ist. Die Linse 403 ist eine negativ ausgebildete Meniskenlinse, deren Brechkraft stärker als die Brechkraft des Kittgliedes ist.

Die zweite Linsenkombination umfasst drei Positivlinsen 404, 405 und 409 und stellt ein Okularsystem dar, mit dem das Zwischenbild 408 des Teleobjektivs nach unendlich abgebildet wird. Die letzte Positivlinse 409 ist ein Kittglied, das aus einer Positivlinse 406 und einer Negativlinse 407 zusammengesetzt ist. Der Begriff Okularsystem findet hier Verwendung, weil die Abbildungseigenschaften der zweiten Linsengruppe denen eines Okulars entsprechen. Im Unterschied zu einem Okular ist das zweite Linsensystem jedoch nicht dazu vorgesehen, für eine Betrachtung des Zwischenbilds 408 mit dem Auge zu dienen.

Zwischen dem Teleobjektiv und dem Okularsystem ist zudem eine Reflektionsfläche 410 angeordnet, der als verspiegelte Glasscheibe oder als Prismenfläche ausgebildet sein kann und mit dem eine Ablenkung des Strahlengangs erfolgt.

Die Radien, Dicken, Glasarten und freie Linsendurchmesser der Linsenflächen F1 bis F13 sind in der nachfolgenden Tabelle zusammengestellt.

**Tabelle**

| Nr. | Radius | Dicke | Glas | ∅_{frei} |
|---|---|---|---|---|
| F1 | 21.5160 | .. | | 17.0 |
| | | 5.000 | NPK52A | |
| F2 | -57.5310 | .. | | 17.0 |
| | | 3.000 | NBAF51 | |
| F3 | 291.352 | .. | | 17.0 |
| | | 24.45 | | |
| F4 | -14.2270 | .. | | 12.0 |
| | | 2.500 | NSK5 | |
| F5 | -47.9850 | .. | | 12.0 |
| | | 88.00 | | |
| F6 | PLAN | Spiegel | | |
| | | 23.21 | | |
| F7 | -277.810 | .. | | 30.5 |
| | | 4.000 | NFK5 | |
| F8 | -50.1190 | .. | | 31.0 |
| | | 0.300 | | |
| F9 | 163.190 | .. | | 31.0 |
| | | 4.500 | NFK5 | |
| F10 | -110.600 | .. | | 31.0 |
| | | 0.300 | | |
| F11 | 66.8340 | .. | | 30.0 |
| | | 6.500 | NLKA9 | |
| F12 | -66.8340 | .. | | 29.0 |
| | | 4.000 | NSF66 | |
| F13 | PLAN | .. | | 27.0 |
| | | 55.00 | | |
| | | .. | | 4.4∅AP |

Die Brechkraftverteilung auf die beiden Linsen des Teleobjektivs ist so gewählt, dass auf eine Feldlinse in der Nähe des Zwischenbildes 408 verzichtet werden kann. So kann erreicht werden, dass die Austrittspupille AP ein reelles Bild der Eintrittspupille des optischen Systems ist, das einen Abstand vom Scheitel 411 der Linsenfläche F13 zwischen 40 Millimetern und 100 Millimetern, insbesondere zwischen 50 Millimetern und 60 Millimetern, aufweist. Wenn die Linsen gemäß der in der Tabelle angegebenen Daten ausgeführt sind, liegt die Austrittspupille AP 55 Millimeter hinter dem Scheitel 411. So ist gewährleistet, dass sich die Austrittspupille AP des Optikadapters 5 in die Eintrittspupille des Kameraobjektivs auch bei einer Telebrennweite des Kameraobjektivs abbilden lässt. Eine Feinjustierung der Pupillenlage kann durch Feinjustieren der Länge der Hülse 13, 113 in der Kamerahalterung erfolgen.

Der Abbildungsmaßstab des Optikadapters 5 ist im vorliegenden Ausführungsbeispiel 3,7 zu 1 gewählt. Ein derartiger Abbildungsmaßstab wird erhalten, wenn die Brennweite des ersten Linsensystems zur Brennweite des zweiten Linsensystems im Verhältnis 3,7 zu 1 steht. In afokalen Systemen wie dem Optikadapter entspricht dieses Zahlenverhältnis auch dem Verhältnis von Eintrittspupillendurchmesser zu Austrittspupillendurchmesser. Der gewählte Abbildungsmaßstab von 3,7 zu 1 erzeugt bei einer Eintrittspupille mit einem Durchmesser von 16 Millimetern eine Austrittspupille AP von ca. 4,3 Millimetern. Wenn man diesen Austrittspupillendurchmesser zu Grunde legt und von einem Pupillenabstand vom Scheitel der letzten Linse von 55 Millimeter ausgeht, so lässt sich erreichen, dass bei einer auf das Kleinbildformat normierten Brennweite von f = 100 des Kameraobjektivs das Bildformat füllende Abbildung erzielt wird. Die auf das Kleinbildformat normierte Brennweite von f = 100 entspricht bei einer Digitalkamera mit 1/1.8"-Sensor einer Brennweite von f = 20,6 Millimeter.

Mit einem erfindungsgemäßen Optikadapter, dessen Linsen die in der Tabelle angegebenen Parameter aufweisen, kann also der Kamerachip einer Digitalkamera mit einem im Telebereich arbeitenden Objektiv voll ausgenutzt werden. Die Festlegung auf die formatfüllende Brennweite f = 100 (normiert auf das Kleinbildformat) ist ein Kompromiss zwischen dem optischen Aufwand und den Kosten. Will man eine formatfüllende Abbildung im Weitwinkelbereich erzielen, so wären bei einer Austrittspupillenlage von 55 Millimetern hinter dem Scheitel der letzten Linse sehr große Linsendurchmesser im Optiksystem notwendig, um die im Weitwinkelbereich vorliegenden größeren Bildwinkel erzielen zu können. Um die geforderten Bildgütekriterien zu erfüllen, ist dann jedoch ein sehr hoher optischer Aufwand, d.h. eine erhöhte Anzahl an Linsen, nötig, was wiederum die Baugröße, das Gewicht und die Herstellungskosten der Optikadapters erhöht.

Bei einem Operationsmikroskop kann die Auskopplung des Strahlengangs für den Optikadapter im parallelen Strahlengang zwischen dem Vergrößerungssystem des Operationsmikroskops und dem Binokulartubus über ein Teilerprisma erfolgen.

Obwohl die Kamerahalterung, der Optikadapter und der Kameraadapter mit Bezug auf eine Fotokamera beschrieben worden sind, sind sie auch zur Verwendung zusammen mit Camcordern geeignet.

### Bezugszeichenliste

- 1: Kameraadapter
- 3: Kamerahalterung
- 5: Optikadapter
- 7: Steckhülse
- 9: Mechanische Schnittstelle
- 11: Kamera
- 13: Hülse
- 15: Rand
- 16: Gehäusefläche
- 19: Klemmring
- 21: Schieber
- 22: Klemmschraube
- 23: Gelenkparallelogramm
- 23 A-D: Hebelarm
- 25 A-D: Gelenk
- 27: Schraube
- 103: Kamerahalterung
- 113: Hülse
- 121: Schieber
- 123: Aufnahme
- 125: Bügel
- 127: Schraube
- 129: Langloch
- 203: Kamerahalterung
- 215: Ansatz
- 217: Aufnahme
- 219: Stift
- 221: Schwenkachse
- 301: erstes Hülsenteil
- 302: zweites Hülsenteil
- 303: Gewinde
- 400: Linse (Kitglied)
- 401: Linse
- 402: Linse
- 403: Linse
- 404: Linse
- 405: Linse
- 406: Linse
- 407: Linse
- 408: Zwischenbild
- 409: Linse (Kitglied)
- 410: Reflektionsfläche
- 411: Scheitel
- F1-F13: Flächen
- AP: Austrittspupille

## Patentansprüche

1. Optikadapter (5) zum Zwischenschalten zwischen ein optisches Beobachtungsgerät und eine Kamera (11), der eine afokale optische Anordnung mit wenigstens vier Linsen (400, 403, 404, 405, 409), mit einer Eintrittspupille und mit einer Austrittspupille (AP) umfasst, wobei
- sich die Austrittspupille (AP) der optischen Anordnung 40 mm bis 100 mm hinter dem Scheitel (411) der letzten Linse (409) befindet und ein reelles Bild einer Eintrittspupille ist,
- die optische Anordnung eine erste Linsenkombination (400, 403) umfasst, die ein Teleobjektiv darstellt, welches aus zwei Linsen (400, 403) besteht, wobei die eine Linse eine Positivlinse (400) und die andere Linse eine der Positivlinse (400) im Strahlengang nachgeschaltete Negativlinse (403) ist, die eine größere Brechkraft als die Positivlinse (400) besitzt, und
- die optische Anordnung eine zweite Linsenkombination (404, 405, 409) umfasst, die der ersten Linsenkombination (400, 403) nachgeschaltet ist und deren Abbildungseigenschaften denen eines Okulars entsprechen.

2. Optikadapter (5) nach Anspruch 1, **dadurch gekennzeichnet, dass** die erste Linsenkombination (400, 403) ein Zwischenbild (408) erzeugt, das mit der zweiten Linsenkombination (404, 405, 409) ins Unendliche abgebildet wird.

3. Optikadapter (5) nach Anspruch 2, **dadurch gekennzeichnet, dass** sich sich das Zwischenbild (408) zwischen der ersten Linsenkombination (400, 403) und der zweiten Linsenkombination (404, 405, 409) befindet.

4. Optikadapter (5) nach einem der Ansprüche 1 bis 3, **dadurch gekennzeichnet, dass** sich die Austrittspupille (AP) der optischen Anordnung 50 mm bis 60 mm hinter dem Scheitel (411) der letzten Linse (409) befindet.

5. Optikadapter (5) nach einem der Ansprüche 1 bis 4, **dadurch gekennzeichnet dass** die Positivlinse (400) der ersten Linsenkombination (400, 403) ein Kittglied ist, das aus einer Positivlinse (401) und einer Negativlinse (402) zusammengesetzt ist.

6. Optikadapter (5) nach Anspruch 5, **dadurch gekennzeichnet, dass** die der Positivlinse (400) im Strahlengang nachgeschaltete Negativlinse (403) eine Meniskenlinse ist.

7. Optikadapter (5) nach Anspruch 5 oder Anspruch 6, **dadurch gekennzeichnet, dass** die zweite Linsenkombination (404, 405, 409) drei Positivlinsen umfasst, wobei die letzte Positivlinse (409) ein Kittglied ist.

8. Optikadapter (5) nach einem der Ansprüche 1 bis 7, **dadurch gekennzeichnet, dass** zwischen der ersten Linsenkombination (400, 403) und der zweiten Linsenkombination (404, 405, 406) eine Reflektionsfläche (410) vorhanden ist.

## Claims

1. Optical adapter (5) for interposition between an optical observation device and a camera (11), comprising an afocal optical arrangement comprising at least four lenses (400, 403, 404, 405, 409) with an entrance pupil and an exit pupil (AP), wherein
- the exit pupil (AP) of the optical arrangement is situated 40 mm to 100 mm behind the vertex (411) of the last lens (409) and is a real image of an entrance pupil,
- the optical arrangement comprises a first lens combination (400, 403), which represents a telephoto objective consisting of two lenses (400, 403), with the one lens being a positive lens (400) and the other lens being a negative lens (403) which is disposed downstream of the positive lens (400) in the beam path and which has a greater refractive power than the positive lens (400), and
- the optical arrangement comprises a second lens combination (404, 405, 409), which is disposed downstream of the first lens combination (400, 403) and the imaging properties of which correspond to those of an eyepiece.

2. Optical adapter (5) according to Claim 1, **characterized in that** the first lens combination (400, 403) generates an intermediate image (408) which is imaged at infinity by the second lens combination (404, 405, 409).

3. Optical adapter (5) according to Claim 2, **characterized in that** the intermediate image (408) is situated between the first lens combination (400, 403) and the second lens combination (404, 405, 409).

4. Optical adapter (5) according to one of Claims 1 to 3, **characterized in that** the exit pupil (AP) of the optical arrangement is situated 50 mm to 60 mm behind the vertex (411) of the last lens (409).

5. Optical adapter (5) according to one of Claims 1 to 4, **characterized in that** the positive lens (400) of the first lens combination (400, 403) is a cemented member, which is composed of a positive lens (401) and a negative lens (402).

6. Optical adapter (5) according to Claim 5, **characterized in that** the negative lens (403) disposed downstream of the positive lens (400) in the beam path is a meniscus lens.

7. Optical adapter (5) according to Claim 5 or Claim 6, **characterized in that** the second lens combination (404, 405, 409) comprises three positive lenses, the last positive lens (409) being a cemented member.

8. Optical adapter (5) according to one of Claims 1 to 7, **characterized in that** a reflection surface (410) is present between the first lens combination (400, 403) and the second lens combination (404, 405, 406).

## Revendications

1. Adaptateur optique (5) destiné à être intercalé entre un instrument d'observation optique et un appareil photo (11) qui comprend un agencement optique afocal avec au moins quatre lentilles (400, 403, 404, 405, 409), avec une pupille d'entrée et une pupille de sortie (AP),
- la pupille de sortie (AP) de l'agencement optique se trouvant à de 40 mm à 100 mm à l'arrière du sommet (411) de la dernière lentille (409) et étant une image réelle d'une pupille d'entrée,
- l'agencement optique comprenant une première association de lentilles (400, 403) qui représente un téléobjectif, lequel est constitué de deux lentilles (400, 403), l'une des lentilles étant une lentille convergente (400) et l'autre lentille étant une lentille divergente (403), montée en aval de la lentille convergente (400) dans la trajectoire du faisceau, qui fait preuve d'un pouvoir réfringent supérieur à celui de la lentille convergente (400) et
- l'agencement optique comprenant une seconde association de lentilles (404, 405, 409) qui est montée en aval de la première association de lentilles (400, 403) et dont les propriétés de reproduction correspondent à celles d'un oculaire.

2. Adaptateur optique (5) selon la revendication 1, **caractérisé en ce que** la première association de lentilles (400, 403) créé une image intermédiaire (408) qui est reproduite à l'infini à l'aide de la seconde association de lentilles (404, 405, 409).

3. Adaptateur optique (5) selon la revendication 2, **caractérisé en ce que** l'image intermédiaire (408) se trouve entre la première association de lentilles (400, 403) et la seconde association de lentilles (404, 405, 409).

4. Adaptateur optique (5) selon l'une quelconque des revendications 1 à 3, **caractérisé en ce que** la pupille de sortie (AP) de l'agencement optique se trouve à de 50 mm à 60 mm à l'arrière du sommet (411) de la dernière lentille (409).

5. Adaptateur optique (5) selon l'une quelconque des revendications 1 à 4, **caractérisé en ce que** la lentille convergente (400) de la première association de lentilles (400, 403) est un élément collé qui est composé d'une lentille convergente (401) et d'une lentille divergente (402).

6. Adaptateur optique (5) selon la revendication 5, **caractérisé en ce que** la lentille divergente (403) montée en aval de la lentille convergente (400) dans la trajectoire du faisceau est une lentille ménisque.

7. Adaptateur optique (5) selon la revendication 5 ou la revendication 6, **caractérisé en ce que** la seconde association de lentilles (404, 405, 409) comprend trois lentilles convergentes, la dernière lentille convergente (409) étant un élément collé.

8. Adaptateur optique (5) selon l'une quelconque des revendications 1 à 7, **caractérisé en ce qu'**une surface réfléchissante (410) est présente entre la première association de lentilles (400, 403) et la seconde association de lentilles (404, 405, 406).
